# EUROPÄISCHE PATENTSCHRIFT

(11) **EP 2 975 742 B1**
(45) Veröffentlichungstag und Bekanntmachung des Hinweises auf die Patenterteilung: **30.08.2017**
(21) Anmeldenummer: 14176877.0
(22) Anmeldetag: 14.07.2014
(51) Int. Cl.: H02K 9/18, H02K 1/20, H02K 1/32

(54) **Elektrische Maschine mit verbesserter Kühlung**
Electrical machine with improved cooling
Machine électrique doté d'un dispositif de refroidissement amélioré

(43) Veröffentlichungstag der Anmeldung: 20.01.2016
(73) Patentinhaber: Siemens Aktiengesellschaft, 80333 München (DE)
(72) Erfinder: Granat, Gerd, 94107 Untergriesbach (DE); Putz, Walter, 94060 Pocking (DE)

(56) Entgegenhaltungen:
- GB-A- 997 197
- SU-A1- 754 575
- US-A- 3 457 439

## Beschreibung

Die Erfindung betrifft eine elektrische Maschine umfassend einen hohlzylinderförmigen Stator, einen im Stator um eine Rotationsachse drehbar gelagerten Rotor, ein Gehäuse aufweisend ein erstes, hohlzylinderförmiges Gehäuseelement, in welchem der Stator und der Rotor angeordnet sind, und ein zweites, hohlzylinderförmiges Gehäuseelement, in welchem das erste hohlzylinderförmige Gehäuseelement angeordnet ist, sowie einen Wärmetauschermantel, welcher zwischen dem ersten Gehäuseelement und dem zweiten Gehäuseelement angeordnet ist.

Eine derartige elektrische Maschine kommt beispielsweise als luftgekühlte elektrische Maschine zum Einsatz. Solche Maschinen werden oftmals entweder mit Hilfe eines fremd- oder selbstbelüfteten Kühlkreislaufes betrieben.

Oftmals sind derartige Maschinen einflutig und röhrengekühlt ausgeführt, wobei bisher beispielsweise Kühlluft parallel zu eng angeordneten Kühlrohren entlang der Maschinenachse strömt.

Aus der DE 10 2012 213 070 A1 ist eine elektrische Maschine mit einem Kühlmantel zur Kühlung mit einem im Kühlmantel fließenden Fluid bekannt, wobei der Kühlmantel einen Mantel aufweisend einen inneren Mantel und einen äußeren Mantel umfasst, wobei der Mantel an einem axialen Ende eine Öffnung aufweist. Weiterhin umfasst der Kühlmantel ein Dichtmittel, das in der Eröffnung angeordnet ist, und eine radiale Verformung, die den Mantel mit dem Dichtmittel verbindet, wobei sich die radiale Verformung in die Öffnung erstreckt.

US 3 457 439 A offenbart:
Elektrische Maschine umfassend - einen hohlzylinderförmigen Stator, - einen im Stator um eine Rotationsachse drehbar gelagerten Rotor, - ein Gehäuse aufweisend ein erstes, hohlzylinderförmiges Gehäuseelement, in welchem der Stator und der Rotor angeordnet sind, und ein zweites, hohlzylinderförmiges Gehäuseelement, in welchem das erste hohlzylinderförmige Gehäuseelement angeordnet ist, - einen Wärmetauschermantel, welcher zwischen dem ersten Gehäuseelement und dem zweiten Gehäuseelement angeordnet ist, wobei der Wärmetauschermantel zumindest ein Leitelement sowie im Wesentlichen axial verlaufende Rohre aufweist, wobei die elektrische Maschine zumindest abschnittsweise derart ausgestaltet ist, dass ein erstes Kühlmedium in einer ersten axialen Vorzugsrichtung durch das erste Gehäuseelement führbar ist, wobei der Wärmetauschermantel zumindest abschnittsweise derart ausgestaltet ist, dass das erste Kühlmedium zwischen den Rohren am jeweiligen Leitelement entlang in einer zweiten, der ersten entgegengesetzten axialen Vorzugsrichtung führbar ist, wobei der Wärmetauschermantel zumindest abschnittsweise derart ausgestaltet ist, dass ein zweites Kühlmedium in axialer Richtung durch die Rohre führbar ist.

Der Erfindung liegt die Aufgabe zugrunde, eine elektrische Maschine mit einer verbesserten Kühlung bereitzustellen.

Diese Aufgabe wird durch eine elektrische Maschine der eingangs genannten Art dadurch gelöst, dass der Wärmetauschermantel zumindest ein im Wesentlichen schraubenbahnförmig um die Rotationsachse verlaufendes Leitelement sowie im Wesentlichen axial verlaufende, durch das jeweilige Leitelement hindurchführende Rohre aufweist, wobei die elektrische Maschine zumindest abschnittsweise derart ausgestaltet ist, dass ein erstes Kühlmedium in einer ersten axialen Vorzugsrichtung durch das erste Gehäuseelement führbar ist, wobei der Wärmetauschermantel zumindest abschnittsweise derart ausgestaltet ist, dass das erste Kühlmedium zwischen den Rohren schraubenbahnförmig am jeweiligen Leitelement entlang in einer zweiten, der ersten entgegengesetzten axialen Vorzugsrichtung führbar ist, wobei der Wärmetauschermantel zumindest abschnittsweise derart ausgestaltet ist, dass ein zweites Kühlmedium in axialer Richtung durch die Rohre führbar ist.

Eine besonders wirkungsvolle Kühlung der elektrischen Maschine wird insbesondere durch den Wärmetauschermantel ermöglicht. Während des Betriebs kann das erste Kühlmedium Abwärme von der elektrischen Maschine, insbesondere dem im ersten Gehäuseelement angeordneten Stator und Rotor, aufnehmen und anhand des Wärmetauschermantels an das zweite Kühlmedium abgeben. Für einen verbesserten Wärmetransfer ist dabei zumindest ein Leitelement vorgesehen, welches im Wesentlichen schraubenbahnförmig um die Rotationsachse verläuft. Unter einer Schraubenbahn wird dabei eine Kurve verstanden, die sich mit im Wesentlichen konstanter Steigung um den Mantel eines Zylinders windet, und auch als Helix, Schraubenlinie oder Wendel bezeichnet wird. Das erste Kühlmedium wird am jeweiligen Leitelement entlang geführt, so dass es zumindest abschnittsweise schraubenbahnförmig am jeweiligen Element entlang strömen kann. Die sich einstellende Kühlmittelströmung des ersten Kühlmediums weist somit eine Überlagerung einer axialen Strömungskomponente mit einer Strömungskomponente in Umfangsrichtung auf. Zum Ein- und Auslass des ersten Kühlmediums weist der Wärmetauschermantel entsprechende Aussparungen auf. Dabei ist vorgesehen, dass das erste Kühlmedium innerhalb des ersten Gehäuseelementes zumindest abschnittsweise in der ersten axialen Vorzugsrichtung und im Kühlmantel entlang der zweiten axialen Vorzugsrichtung führbar ist. Insbesondere kann ein erster Kühlkreislauf, in welchen das erste Kühlmedium geführt wird, geschlossen ausgeführt sein, was weiter den Vorteil eines erhöhten Explosionsschutzes mit sich bringt.

Das zweite Kühlmedium wird durch die im Wesentlichen axial verlaufenden Rohre durch den Wärmetauschermantel hindurchgeführt, wobei die Rohre das jeweilige Leitelement praktisch durchstechen. Beispielsweise kann ein zweiter Kühlkreislauf, in welchem das zweite Kühlmedium geführt wird, geschlossen oder offen ausgeführt werden, wobei der zweite Kühlkreislauf das zweite Kühlmedium vorzugsweise an einer Wärmesenke vorbeiführt, so dass das zweite Kühlmedium die Abwärme der elektrischen Maschine abgeben kann. Vorzugsweise ist der zweite Kühlkreislauf dabei offen ausgestaltet, so dass das zweite Kühlmedium von außerhalb der elektrischen Maschine bzw. des Gehäuses in das Gehäuse geführt wird und schließlich wieder nach außerhalb der elektrischen Maschine bzw. des Gehäuses abgegeben wird.

Die vom ersten Kühlmedium aufgenommene Abwärme der elektrischen Maschine kann somit über die Rohre an das zweite Kühlmedium abgegeben werden. Von besonderem Vorteil ist dabei, dass das erste Kühlmedium aufgrund der schraubenbahnförmigen Führung durch das jeweilige Leitelement nicht parallel zu den Rohren geführt wird, in welchen das zweite Kühlmedium strömen kann. Vielmehr ist vorgesehen, dass das erste Kühlmedium schräg bis nahezu senkrecht zu den Rohren geführt wird, wodurch ein besonders guter Wärmeübergang erreicht werden kann. Die vorgeschlagene elektrische Maschine erreicht die verbesserte Kühlung somit insbesondere durch eine verbesserte und optimierte Führung des ersten Kühlmediums. Dabei ist die Wärmeübertragung vom ersten Kühlmedium über die Rohre an das zweite Kühlmedium besonders vorteilhaft ausgestaltet, insbesondere im Vergleich zu Rohren, welche parallel von einem Kühlmedium umströmt werden.

Für das erste Kühlmedium und/oder das zweite Kühlmedium kann beispielsweise Luft, Kühlwasser oder Öl gewählt werden. Dies ist insbesondere abhängig von der abzuführenden Wärme der elektrischen Maschine, zur Verfügung stehendem Bauraum und eventuell vorhandenen Versorgungsanschlüssen. Vorzugsweise wird dabei Luft, insbesondere in einem geschlossenen ersten Kühlkreislauf, als erstes Kühlmedium eingesetzt. Als zweites Kühlmedium kann ebenfalls Luft, vorteilhafterweise in einem offenen zweiten Kühlkreislauf, oder beispielsweise Kühlwasser, welches über entsprechende Versorgungsleitungen zu- und abgeführt wird, verwendet werden.

Vorzugsweise erstreckt sich das Leitelement bzw. erstrecken sich die Leitelemente zusammen zumindest entlang drei Vierteln der axialen Erstreckung des Stators, insbesondere zumindest entlang der kompletten axialen Erstreckung des Stators. Die Rohre sind vorzugsweise in axialer Richtung länger als die axiale Erstreckung des Leitelementes bzw. der Leitelemente, wobei sich die Rohre vorzugsweise zumindest entlang der kompletten axialen Erstreckung des Stators erstrecken, insbesondere zumindest entlang der kompletten axialen Erstreckung des Stators inklusive der Wickelköpfe. Die Rohre können prinzipiell einen ringförmigen Querschnitt oder, insbesondere zur Oberflächenvergrößerung, einen andersartigen Querschnitt aufweisen.

Bei einer vorteilhaften Ausgestaltung der Erfindung ist das jeweilige Leitelement derart ausgestaltet, dass ein Steigungswinkel der jeweiligen Schraubenbahn höchstens 60°, vorzugsweise 10° bis 30°, beträgt.

Der Steigungswinkel, welcher auch als Gangwinkel bezeichnet wird, hängt von der Ganghöhe und dem Radius der Schraubenbahn ab, wobei die Ganghöhe diejenige Strecke in axialer Richtung ist, um die sich das jeweilige Leitelement bei einer vollen Umdrehung in axialer Richtung windet. Berechnet werden kann der Steigungswinkel als Arkustangens aus dem Quotienten aus der Ganghöhe und dem Umfang, wobei sich der Umfang als 2 mal der Kreiszahl Π mal dem Radius ergibt.

Durch den Steigungswinkel wird gleichzeitig der Auftreffwinkel festgelegt, in welchem das erste Kühlmedium gegen die Rohre strömen kann. Bei einem kleinen bzw. großen Steigungswinkel trifft die Strömung des ersten Kühlmediums beinahe senkrecht bzw. beinahe parallel auf die Rohre. Vorteilhafterweise wird die Ganghöhe derart gewählt, dass der Steigungswinkel höchstens 60° beträgt, vorzugsweise liegt der Steigungswinkel in einem Bereich von 50° bis über 0°, wobei besonders gute Ergebnisse mit einem Steigungswinkel von 10° bis 30° erzielbar sind. Entsprechend beträgt der Auftreffwinkel zumindest 30°, vorzugsweise liegt der Auftreffwinkel in einem Bereich von 40° bis unter 90°, wobei besonders gute Ergebnisse mit einem Auftreffwinkel von 60° bis 80° erzielbar sind. Bei einer vorteilhaften Ausgestaltung der Erfindung ist die elektrische Maschine derart ausgestaltet, dass das erste Kühlmedium fluiddicht vom zweiten Kühlmedium abgetrennt ist. Die fluiddichte Trennung der beiden Kühlmedien ermöglicht einen besonders guten Explosionsschutz. Dadurch kann insbesondere zuverlässig verhindert werden, dass zündfähiger Staub in Bereiche der elektrischen Maschine mit Hochspannung, insbesondere nahe dem Stator und gegebenenfalls dem Rotor, eindringen kann. Die fluiddichte Trennung kann beispielsweise dadurch erreicht werden, dass der erste Kühlkreislauf, in welchem das erste Kühlmedium geführt wird, geschlossen ausgeführt wird.

Bei einer weiteren vorteilhaften Ausgestaltung der Erfindung weist der Stator ein Statoraktivteil und an seiner jeweiligen axialen Stirnseite einen aus dem Statoraktivteil herausragenden Wickelkopf auf, wobei der Rotor ein Rotoraktivteil aufweist, wobei der Rotor zumindest an einer ersten axialen Stirnseite zumindest eine Rotor-Öffnung aufweist, wobei der Rotor und der Stator an einer Mehrzahl von axialen Positionen nach radial außen offene Rotor-Kühlkanäle bzw. Stator-Kühlkanäle aufweisen, wobei die Rotor-Kühlkanäle mit der jeweiligen Rotor-Öffnung verbunden sind, wobei zwischen dem Stator und dem ersten Gehäuseelement zumindest eine Ausnehmung angeordnet ist, durch welche das erste Kühlmedium in axialer Richtung führbar ist.

Innerhalb des ersten Gehäuseelementes wird das erste Kühlmedium zumindest abschnittsweise entlang der ersten axialen Vorzugsrichtung geführt, wobei der Rotor hier zumindest an seiner ersten axialen Stirnseite zumindest eine Rotor-Öffnung aufweist. Die jeweilige Rotor-Öffnung ist mit den entlang der axialen Erstreckung des Rotors angeordneten Rotor-Kühlkanälen verbunden, so dass das erste Kühlmedium über die jeweilige Rotor-Öffnung und die Kühlkanäle durch den Rotor hindurch strömen kann. Dabei verläuft die Strömung des ersten Kühlmediums durch die jeweilige Rotor-Öffnung im Wesentlichen in axialer Richtung und durch die nach radial außen offenen Rotor-Kühlkanäle im Wesentlichen in radialer Richtung.

Zur verlustarmen Führung der Strömung des ersten Kühlmediums sind die Stator-Kühlkanäle an circa denselben axialen Positionen angeordnet wie die Rotor-Kühlkanäle, wobei die Strömung des ersten Kühlmediums durch den Stator somit auch im Wesentlichen in radialer Richtung verläuft. An die nach radial au-ßen offenen Stator-Kühlkanäle schließt sich die zwischen dem Stator und dem ersten Gehäuseelement angeordnete, jeweilige Ausnehmung an, so dass das erste Kühlmedium schließlich im Wesentlichen in axialer Richtung durch die jeweilige Ausnehmung strömen kann.

Eine derartige Ausgestaltung ermöglicht eine zuverlässige Kühlung der Aktivteile der elektrischen Maschine. Vorzugsweise weist der Rotor dabei eine Stegwelle auf, auf welcher das Rotoraktivteil, beispielsweise das Rotor-Blechpaket oder eine Permanentmagnet-Anordnung, angeordnet ist. Die jeweiligen Rotor-Öffnungen und die Zuleitung zu den nach außen offenen Rotor-Kühlkanälen werden somit über die jeweilige Nut zwischen zwei benachbarten Stegen der Stegwelle realisiert. Bei einem sich drehenden Rotor bewirken die Stege der Stegwelle dabei eine Umwälzung des ersten Kühlmediums. Dies kann weiterhin unterstützt werden durch so genannte Druckfinger, welche zwischen zwei Rotor-Kühlkanälen angeordnet sind, welche in axialer Richtung an circa derselben Position und dabei in Umfangsrichtung benachbart zueinander angeordnet sind.

Bei einer weiteren vorteilhaften Ausgestaltung der Erfindung weist die elektrische Maschine dabei zumindest an seiner ersten axialen Stirnseite zumindest eine erste Leitvorrichtung auf, mittels welcher jeweils das erste Kühlmedium vom Wärmetauschermantel zur jeweiligen Rotor-Öffnung und zum jeweiligen Wickelkopf leitbar ist.

Die jeweilige erste Leitvorrichtung stellt sicher, dass das erste Kühlmedium zuverlässig durch den Rotor und den Stator hindurchgeführt wird und zusätzlich zum jeweiligen Wickelkopf geführt wird. Insbesondere lässt sich durch die jeweilige erste Leitvorrichtung ein strömungstechnischer Kurzschluss verhindern. Vorzugsweise ist die jeweilige erste Leitvorrichtung im Bereich jener axialen Stirnseite des Rotors angeordnet, an welcher auch jeweilige Rotor-Öffnungen vorgesehen sind.

Bei einer weiteren vorteilhaften Ausgestaltung der Erfindung weist die elektrische Maschine dabei eine erste Strömungsmaschine zur Umwälzung des ersten Kühlmediums auf, wobei die elektrische Maschine zumindest an einer zweiten axialen Stirnseite zumindest eine zweite Leitvorrichtung aufweist, wobei mittels der jeweiligen zweiten Leitvorrichtung das erste Kühlmedium vom jeweiligen Wickelkopf zur ersten Strömungsmaschine und von der ersten Strömungsmaschine zum Wärmetauschermantel leitbar ist.

Zur Umwälzung des ersten Kühlmediums weist die elektrische Maschine eine erste Strömungsmaschine auf, welche in jenem axialen Bereich angeordnet ist, in welchem sich auch die jeweilige zweite Leitvorrichtung befindet. Üblicherweise ist die jeweilige zweite Leitvorrichtung dabei in axialer Verlängerung des Stators bzw. des Rotors innerhalb des Gehäuses, insbesondere innerhalb des ersten Gehäuseelementes, angeordnet.

Die jeweilige zweite Leitvorrichtung ermöglicht eine verlustarme Kühlmittelströmung des ersten Kühlmediums vom jeweiligen Wickelkopf zur ersten Strömungsmaschine und anschließend von der ersten Strömungsmaschine zum Wärmetauschermantel. Prinzipiell ist jedoch auch eine umgekehrte Strömungsrichtung des ersten Kühlmediums denkbar.

Insbesondere ist lediglich eine erste Strömungsmaschine zur Umwälzung des ersten Kühlmediums vorgesehen, wobei das erste Kühlmedium dem Stator und dem Rotor beispielsweise an der ersten axialen Stirnseite zugeführt wird und an der zweiten axialen Stirnseite abfließt. Für diesen Fall durchströmt das erste Kühlmedium den Stator und den Rotor über seine jeweilige gesamte axiale Erstreckung in einer axialen Vorzugsrichtung von der ersten zur zweiten axialen Stirnseite, wobei die erste Strömungsmaschine vorzugsweise als Radial-Strömungsmaschine realisiert ist. Vorteilhafterweise sind die Rotor-Öffnungen auf der der Radial-Strömungsmaschine gegenüberliegenden Stirnseite des Rotors angeordnet, wobei der Rotor auf der Stirnseite der Radial-Strömungsmaschine keine derartigen Rotor-Öffnungen an seiner Stirnseite aufweist. Für den Fall einer umgekehrten Strömungsrichtung wird das erste Kühlmedium von der jeweiligen zweiten Leitvorrichtung insbesondere vom Wärmetauschermantel zur ersten Strömungsmaschine und anschließend von der ersten Strömungsmaschine zum jeweiligen Wickelkopf geleitet. Hierzu ist die erste Strömungsmaschine vorteilhafterweise als Axial-Strömungsmaschine ausgestaltet. Vorzugsweise ermöglicht die jeweilige zweite Leitvorrichtung weiterhin, dass das erste Kühlmedium neben dem jeweiligen Wickelkopf auch gegebenenfalls vorhandenen Rotor-Öffnungen zugeführt werden kann. Werden der Rotor und der Stator entlang ihrer gesamten axialen Erstreckung entlang einer zweiten axialen Vorzugsrichtung von der zweiten axialen Stirnseite zur ersten axialen Stirnseite vom ersten Kühlmedium durchströmt, sind Rotor-Öffnungen vorzugsweise lediglich auf der zweiten axialen Stirnseite des Rotors angeordnet. Zusätzlich kann an der ersten axialen Stirnseite zumindest eine weitere Leitvorrichtung vorgesehen sein, mittels welcher jeweils das erste Kühlmedium vom jeweiligen Wickelkopf in den Wärmetauschermantel führbar ist.

Bei einer alternativen vorteilhaften Ausgestaltung der Erfindung weist die elektrische Maschine dabei zwei erste Strömungsmaschinen zur Umwälzung des ersten Kühlmediums auf, wobei die elektrische Maschine an seinen beiden axialen Stirnseiten jeweils eine dritte Leitvorrichtung aufweist, wobei mittels der jeweiligen dritten Leitvorrichtung das erste Kühlmedium vom Wärmetauschermantel zur jeweiligen ersten Strömungsmaschine und von der jeweiligen ersten Strömungsmaschine zur jeweiligen Rotor-Öffnung und zum jeweiligen Wickelkopf leitbar ist.

An jeder der beiden axialen Stirnseiten ist eine der beiden ersten Strömungsmaschinen zur Umwälzung des ersten Kühlmittels angeordnet, wobei die jeweilige dritte Leitvorrichtung sicherstellt, dass das erste Kühlmedium vom Wärmetauschermantel effizient zur jeweiligen ersten Strömungsmaschine und anschließend von der jeweiligen ersten Strömungsmaschine zur jeweiligen Rotor-Öffnung und zum jeweiligen Wickelkopf leitbar ist. Hierzu weist der Rotor an seinen beiden axialen Stirnseiten jeweils Rotor-Öffnungen auf, wobei jeweils vorzugsweise eine Axial-Strömungsmaschine zum Einsatz kommt. Während des Betriebs weist die elektrische Maschine somit im Inneren des ersten Gehäuseelementes bezüglich der Strömung des ersten Kühlmediums eine jeweilige axiale Vorzugsrichtung auf, welche von der jeweiligen Stirnseite zur axialen Mitte gerichtet ist. Dadurch wird eine insbesondere zur axialen Mitte symmetrische Kühlmittelströmung des ersten Kühlmediums ermöglicht, so dass eine Überhitzung der elektrischen Maschine beispielsweise im Bereich ihrer axialen Mitte und insbesondere der beiden Wickelköpfe zuverlässig verhindert wird.

Prinzipiell ist dabei auch eine umgekehrte Strömungsrichtung des ersten Kühlmediums denkbar, wobei hierzu vorteilhafterweise jeweils eine Radial-Strömungsmaschine zum Einsatz kommt. Insbesondere kann die oben erläuterte, zumindest eine erste Leitvorrichtung als eine der dritten Leitvorrichtung ausgebildet sein.

Bei einer weiteren vorteilhaften Ausgestaltung der Erfindung weist das erste Gehäuseelement dabei im Bereich seiner axialen Mitte zumindest einen Durchgang auf, durch welchen das erste Kühlmedium jeweils von innerhalb des ersten Gehäuseelementes in den Wärmetauschermantel führbar ist.

Durch das Anordnen des jeweiligen Durchgangs im Bereich der axialen Mitte des ersten Gehäuseelementes wird eine insbesondere zur axialen Mitte symmetrische Kühlmittelströmung des ersten Kühlmediums ermöglicht, wodurch eine Überhitzung der elektrischen Maschine beispielsweise im Bereich ihrer axialen Mitte und insbesondere der beiden Wickelköpfe zuverlässig verhindert wird.

Vorzugsweise weist der Wärmetauschermantel dabei zwei schraubenbahnförmig ausgestaltete Leitelemente auf, welche sich vom Bereich der axialen Mitte zur jeweiligen Stirnseite erstrecken. Die beiden Wärmeleitelemente können dabei derart ausgestaltet sein, dass ihre Schraubenbahnen den gleichen Drehsinn oder vorzugsweise einander entgegengesetzten Drehsinn aufweisen.

Bei einer weiteren vorteilhaften Ausgestaltung der Erfindung weist das Gehäuse zumindest eine erste Gehäuseöffnung und zumindest eine zweite Gehäuseöffnung zum Ein- und Auslassen des zweiten Kühlmediums auf, wobei die elektrische Maschine eine zweite Strömungsmaschine zur Umwälzung des zweiten Kühlmediums aufweist, wobei die zweite Strömungsmaschine und die Rohre des Wärmetauschermantels strömungstechnisch zwischen der jeweiligen ersten Gehäuseöffnung und der jeweiligen zweiten Gehäuseöffnung angeordnet sind.

Der zweite Kühlkreislauf, in welchem das zweite Kühlmedium geführt wird, ist somit offen ausgeführt, wobei das zweite Kühlmedium über die jeweilige erste Gehäuseöffnung und die jeweilige zweite Gehäuseöffnung durch das Gehäuse nach innen bzw. außen strömen kann. Umgewälzt wird das zweite Kühlmedium dabei durch die zweite Strömungsmaschine, wodurch ein zuverlässiger Abtransport der Abwärme der elektrischen Maschine gewährleistet wird.

Bei einer weiteren vorteilhaften Ausgestaltung der Erfindung sind die zumindest eine erste Gehäuseöffnung dabei im Bereich einer ersten axialen Stirnseite und die zumindest eine zweite Gehäuseöffnung im Bereich einer zweiten axialen Stirnseite angeordnet.

Die Rohre erstrecken sich vorteilhafterweise zumindest entlang der kompletten axialen Erstreckung des Rotors bzw. des Stators, wobei das zweite Kühlmedium stets in dieselbe axiale Richtung strömt. Vorzugsweise ist auch die restliche elektrische Maschine derart ausgestaltet, dass das erste Kühlmedium im Wärmetauschermantel entlang der kompletten axialen Erstreckung des Rotors bzw. des Stators stets in dieselbe axiale Richtung strömt. Ein besonders guter Wärmeübergang wird dabei dadurch erreicht, dass eine Gegenstromkühlung realisiert wird, so dass die Strömungsrichtung des zweiten Kühlmediums jener des ersten Kühlmediums entgegengesetzt ist.

Beispielsweise kann die jeweilige Gehäuseöffnung an einer radialen oder einer axialen Außenfläche des Gehäuses angeordnet sein, so dass das zweite Kühlmedium in radialer oder in axialer Richtung in das Gehäuse hinein oder aus dem Gehäuse heraus strömen kann.

Vorzugsweise ist vorgesehen, das zweite Kühlmedium nach dem Eintritt in das Gehäuse mittels einer geeignet ausgestalteten Leiteinheit nach radial innen zu leiten, einem Radiallüfter zuzuführen und mittels der Leiteinheit in die Rohre zu führen.

Bei einer alternativen vorteilhaften Ausgestaltung der Erfindung sind dabei jeweils eine erste Gehäuseöffnung im Bereich der jeweiligen axialen Stirnseite und die zumindest eine zweite Gehäuseöffnung im Bereich der axialen Mitte angeordnet.

Vorteilhafterweise erstrecken sich die Rohre zumindest von der jeweiligen Stirnseite des Stators bzw. des Rotors bis in den Bereich der axialen Mitte, wobei die Rohre an der jeweiligen Stirnseite mit der jeweiligen ersten Gehäuseöffnung und im Bereich der axialen Mitte mit der jeweiligen zweiten Gehäuseöffnung verbunden sind. Dabei können zwei zweite Strömungsmaschinen vorgesehen sein, wobei die eine zweite Strömungsmaschine an der einen axialen Stirnseite und die andere zweite Strömungsmaschine an der anderen axialen Stirnseite jeweils zwischen den Rohren und der jeweiligen zweiten Gehäuseöffnung angeordnet ist.

In einem jeweiligen, axialen Abschnitt ergibt sich insbesondere eine Kühlmittelströmung des zweiten Kühlmediums von der jeweiligen axialen Stirnseite zur axialen Mitte, wobei die jeweilige zweite Strömungsmaschine vorzugsweise als Radial-Strömungsmaschine ausgestaltet ist. Vorzugsweise ist die restliche elektrische Maschine derart ausgestaltet, dass das erste Kühlmedium im Wärmetauschermantel durch den jeweiligen, oben erläuterten Durchgang von der axialen Mitte zur jeweiligen axialen Stirnseite strömt, so dass eine Gegenstromkühlung realisiert wird, bei welcher die Strömungsrichtung des zweiten Kühlmediums in den beiden axialen Bereichen jeweils jener des ersten Kühlmediums entgegengesetzt ist.

Prinzipiell ist dabei auch eine umgekehrte Strömungsrichtung des zweiten Kühlmediums denkbar.

Beispielsweise kann die jeweilige erste Gehäuseöffnung an einer radialen oder einer axialen Außenfläche des Gehäuses angeordnet sein, so dass das zweite Kühlmedium in radialer oder in axialer Richtung in das Gehäuse hinein oder aus dem Gehäuse heraus strömen kann.

Bei einer weiteren vorteilhaften Ausgestaltung der Erfindung ist die elektrische Maschine mit einer elektrischen Leistung von zumindest 1 MW, insbesondere mehr als 3 MW, betreibbar ist, weist die elektrische Maschine eine Achshöhe von zumindest 500 mm, insbesondere mehr als 630 mm, auf, und/oder ist die elektrische Maschine als Generator, insbesondere Windkraftgenerator, oder als Antriebsmotor für einen Pumpenantrieb, einen Kompressorantrieb oder einen Stahlwerksantrieb ausgestaltet.

Die erläuterten Strömungsmaschinen können insbesondere drehfest mit dem Rotor oder einer Welle der elektrischen Maschine verbundene Propellerblätter aufweisen, wobei auch unabhängig von der Drehzahl des Rotors bzw. der Welle betreibbare Strömungsmaschinen zum Einsatz kommen können.

Im Folgenden wird die Erfindung anhand der in den Figuren dargestellten Ausführungsbeispiele näher beschrieben und erläutert. Es zeigen:
- FIG 1: ein erstes Ausführungsbeispiel der erfindungsgemäßen elektrischen Maschine,
- FIG 2: eine alternative Ansicht des ersten Ausführungsbeispiels,
- FIG 3: ein zweites Ausführungsbeispiel der erfindungsgemäßen elektrischen Maschine und
- FIG 4: eine alternative Ansicht des zweiten Ausführungsbeispiels.

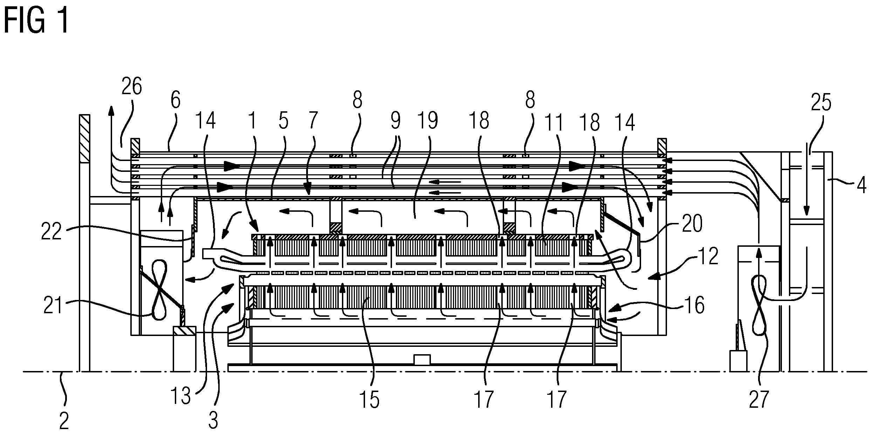

Figur 1 zeigt ein erstes Ausführungsbeispiel der erfindungsgemäßen elektrischen Maschine. Dargestellt ist dabei ein Längsschnitt entlang einer Rotationsachse 2 der elektrischen Maschine.

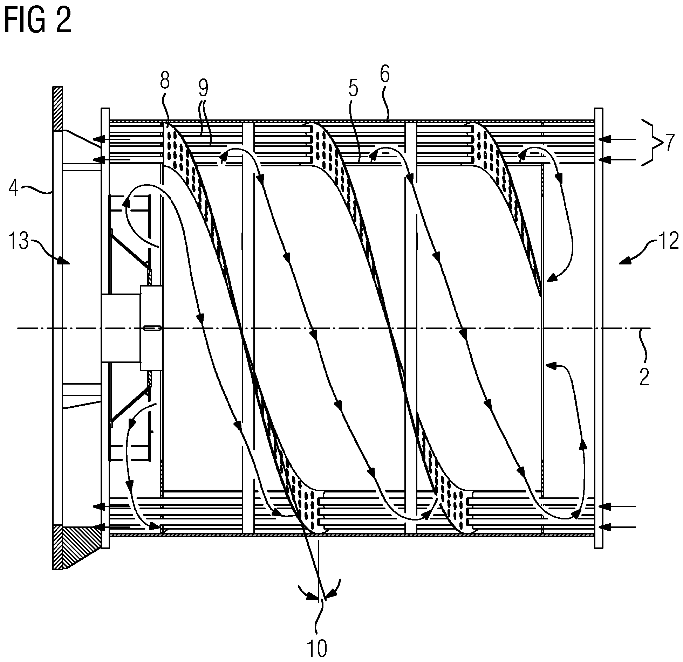

Die elektrische Maschine weist ein Gehäuse 4 mit einem ersten, hohlzylinderförmigen Gehäuseelement 5 und einem zweiten, hohlzylinderförmigen Gehäuseelement 6 auf. In dem ersten Gehäuseelement 5 sind ein hohlzylinderförmiger Stator 1 und ein im Stator 1 um die Rotationsachse 2 drehbar gelagerter Rotor 3 angeordnet. Das erste Gehäuseelement 5 ist wiederum innerhalb des zweiten Gehäuseelementes 6 angeordnet. Zwischen dem ersten Gehäuseelement 5 und dem zweiten Gehäuseelement 6 ist ein Wärmetauschermantel 7 angeordnet. Der Wärmetauschermantel 7 weist ein im Wesentlichen schraubenbahnförmig um die Rotationsachse 2 verlaufendes Leitelement 8 sowie im Wesentlichen axial verlaufende, durch das Leitelement 8 hindurchführende Rohre 9 auf, was in Figur 2 näher dargestellt ist.

Die elektrische Maschine ist derart ausgestaltet, dass ein erstes Kühlmedium in einer ersten axialen Vorzugsrichtung durch das erste Gehäuseelement 5 führbar ist. Im Rahmen des Ausführungsbeispiels wird das erste Kühlmedium innerhalb des ersten Gehäuseelementes 5 von einer ersten axialen Stirnseite 12, in Figur 1 rechts, zu einer zweiten axialen Stirnseite 13, in Figur 1 links, geführt. Hierzu kann ein Teil des ersten Kühlmediums an der ersten axialen Stirnseite 12 über zumindest eine Rotor-Öffnung 16 in axialer Richtung in den Rotor 3 eindringen und den Rotor 3 über Rotor-Kühlkanäle 17, welche im Rotoraktivteil 15 angeordnet und nach radial außen offen sind, wieder verlassen. Hierzu weist der Rotor 3 an der zweiten axialen Stirnseite 13 keine derartigen Rotor-Öffnungen 16 auf. An die Rotor-Kühlkanäle 17 schließen sich im Statoraktivteil 11 Stator-Kühlkanäle 18 an, durch welche das erste Kühlmedium nach radial außen strömen kann. Ein anderer Teil des ersten Kühlmediums kann einen Wickelkopf 14 umströmen, welcher an der ersten axialen Stirnseite 12 axial aus dem Statoraktivteil 11 herausragt. Das erste Kühlmedium wird anschließend insgesamt in einer zwischen dem Stator 1 und dem ersten Gehäuseteil 5 angeordneten Ausnehmung 19 in axialer Richtung zur zweiten axialen Stirnseite 13 geführt, um am dortigen Wickelkopf 14 vorbei aus dem ersten Gehäuseelement 5 zu einer ersten Strömungsmaschine 21 geführt zu werden, mittels welcher das erste Kühlmedium umgewälzt werden kann. Vorzugsweise ist die erste Strömungsmaschine 21 dabei als Radial-Strömungsmaschine ausgeführt.

Der Wärmetauschermantel 7 ist derart ausgestaltet, dass das erste Kühlmedium zwischen den Rohren 9 hindurch schraubenbahnförmig am Leitelement 8 entlang in einer zweiten, der ersten entgegengesetzten axialen Vorzugsrichtung führbar ist. Im Rahmen des Ausführungsbeispiels wird das erste Kühlmedium innerhalb des Wärmetauschers 7 von der zweiten axialen Stirnseite 13 zu der ersten axialen Stirnseite 12 geführt.

Zur Führung des ersten Kühlmediums ist dabei auf der ersten axialen Stirnseite 12 eine erste Leitvorrichtung 20 vorgesehen, mittels welcher das erste Kühlmedium vom Wärmetauschermantel 7 zur jeweiligen Rotor-Öffnung 16 und zum jeweiligen Wickelkopf 14 leitbar ist. Weiterhin ist auf der zweiten axialen Stirnseite 13 eine zweite Leitvorrichtung 22 vorgesehen, mittels welcher das erste Kühlmedium vom jeweiligen Wickelkopf 14 zur ersten Strömungsmaschine 21 und von der ersten Strömungsmaschine 21 zum Wärmetauschermantel 7 leitbar ist.

Weiterhin ist der Wärmetauschermantel 7 derart ausgestaltet, dass ein zweites Kühlmedium in axialer Richtung durch die Rohre 9 führbar ist. Im Rahmen des Ausführungsbeispiels weist das Gehäuse 4 hierzu eine erste Gehäuseöffnung 25 an der ersten axialen Stirnseite 12 und eine zweite Gehäuseöffnung 26 an der zweiten axialen Stirnseite 13 auf, durch welche das zweite Kühlmedium in das Gehäuse 4 ein- bzw. aus dem Gehäuse 4 austreten kann. Zur Umwälzung des zweiten Kühlmediums ist eine zweite Strömungsmaschine 27 vorgesehen. Dabei sind die Rohre 9 und die zweite Strömungsmaschine 27 strömungstechnisch zwischen der ersten Gehäuseöffnung 25 und der zweiten Gehäuseöffnung 26 angeordnet.

Figur 2 zeigt eine alternative Ansicht des ersten Ausführungsbeispiels. Gleiche Bezugszeichen wie in Figur 1 bezeichnen dabei gleiche Gegenstände. In Figur 2 sind vor allem Details des Wärmetauschermantels 7 dargestellt, welcher zwischen dem ersten Gehäuseelement 5 und dem zweiten Gehäuseelement 6 angeordnet ist. Der Wärmetauschermantel 7 weist im Wesentlichen axial verlaufende Rohre 9 auf, durch welche das zweite Kühlmedium strömen kann. Im Rahmen des Ausführungsbeispiels durchströmt das zweite Kühlmedium die Rohre 9 in axialer Richtung von der ersten axialen Stirnseite 12 zur zweiten axialen Stirnseite 13. Die Rohre 9 durchstoßen das im Wesentlichen schraubenbahnförmig um die Rotationsachse 2 verlaufende Leitelement 8. Das erste Kühlmedium kann am Leitelement 8 entlang an den Rohren 9 vorbei schraubenbahnförmig von der zweiten axialen Stirnseite 13 zur ersten axialen Stirnseite 12 strömen. Das Leitelement 8 weist dabei einen Steigungswinkel 10 bezüglich seiner Schraubenbahn auf, welcher vorzugsweise höchstens 60°, insbesondere 10° bis 30°, beträgt.

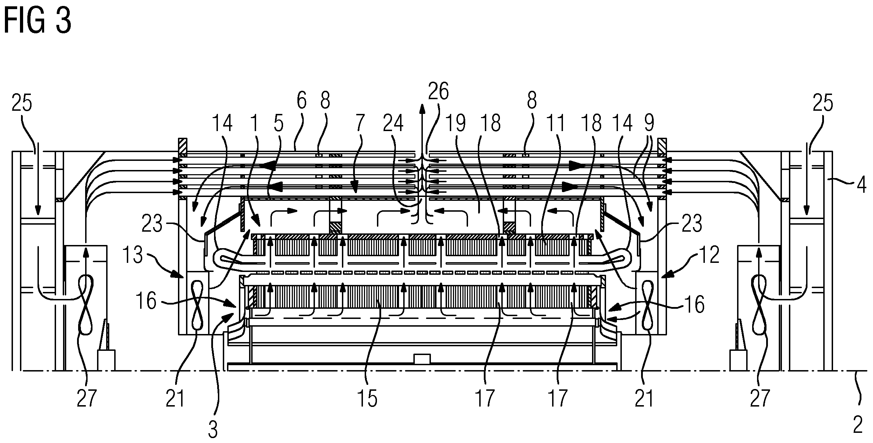

Figur 3 zeigt ein zweites Ausführungsbeispiel der erfindungsgemäßen elektrischen Maschine. Im Unterschied zum ersten Ausführungsbeispiel ist die elektrische Maschine des zweiten Ausführungsbeispiels im Wesentlichen symmetrisch bezüglich eines Querschnittes durch die axiale Mitte der elektrischen Maschine.

Die Führung des ersten Kühlmediums gestaltet sich wie folgt. Bezüglich der Strömung des ersten Kühlmediums weist die elektrische Maschine zwei Abschnitte auf, nämlich von der jeweiligen axialen Stirnseite 12 bzw. 13 zur axialen Mitte. In jedem der beiden Abschnitte wird das erste Kühlmedium durch das erste Gehäuseelement 5 in einer ersten axialen Vorzugsrichtung geführt, welche im Rahmen des Ausführungsbeispiels von der jeweiligen axialen Stirnseite 12 bzw. 13 zur axialen Mitte führt. Im Wärmetauschermantel 7 wird das erste Kühlmedium in einer zweiten, der ersten entgegengesetzten axialen Vorzugsrichtung geführt, welche von der axialen Mitte zur jeweiligen axialen Stirnseite 12 bzw. 13 führt.

Das erste Kühlmedium kann im Bereich der jeweiligen axialen Stirnseite 12 bzw. 13 aus dem Wärmetauschermantel 7 austreten und, geführt durch eine jeweilige dritte Leitvorrichtung 23, nach radial innen zu einer jeweiligen ersten Strömungsmaschine 21 strömen, mittels welcher das erste Kühlmedium umwälzbar ist. Vorzugsweise ist die jeweilige erste Strömungsmaschine 21 als Axial-Strömungsmaschine ausgeführt. Anschließend wird das erste Kühlmedium mittels der jeweiligen dritten Leitvorrichtung 23 zur jeweiligen Rotor-Öffnungen 16 und zum jeweiligen Wickelkopf 14 geführt. Ein jeweiliger erster Teil des ersten Kühlmediums kann dabei den Rotor 3 über die jeweiligen Rotor-Öffnungen 16 und die jeweiligen Rotor-Kühlkanäle 17 sowie den Stator 1 über sich anschließende Stator-Kühlkanäle 18 durchströmen. Ein zweiter Teil des ersten Kühlmediums kann den jeweiligen Wickelkopf 14 umströmen, um sich mit dem jeweiligen ersten Teil des ersten Kühlmediums in der Ausnehmung 19 zu vereinen und zur axialen Mitte zur strömen. Im Bereich der axialen Mitte weist das erste Gehäuseelement 5 einen Durchgang 24 auf, durch welchen das erste Kühlmedium von innerhalb des ersten Gehäuseelementes 5 in den Wärmetauschermantel 7 führbar ist. Im Wärmetauschermantel 7 wird ein Teil des ersten Kühlmediums zur ersten axialen Stirnseite 12 und der restliche Teil des ersten Kühlmediums zur zweiten axialen Stirnseite 13 geführt. Dabei wird das erste Kühlmedium im Wärmetauschermantel 7 jeweils zwischen den Rohren 9 entlang des schraubenbahnförmig ausgestalteten Leitelementes 8 geführt.

Das zweite Kühlmedium kann über die an der jeweiligen axialen Stirnseite 12 bzw. 13 angeordnete erste Gehäuseöffnung 25 in das Gehäuse 4 eindringen und wird den Rohren 9 des Wärmetauschermantels 7 zugeführt. Der Wärmetauschermantel 7 ist dabei derart ausgestaltet, dass das zweite Kühlmedium durch die Rohre 9 von der jeweiligen axialen Stirnseite 12 bzw. 13 zur axialen Mitte führbar ist, wobei das zweite Kühlmedium den Wärmetauschermantel 7 über die im Bereich der axialen Mitte angeordnete zweite Gehäuseöffnung 26 verlassen kann. Zur Umwälzung des zweiten Kühlmediums ist an der jeweiligen axialen Stirnseite 12 bzw. 13 eine zweite Strömungsmaschine 27 angeordnet. Vorzugsweise ist die jeweilige zweite Strömungsmaschine 27 als Radial-Strömungsmaschine ausgeführt. Die Rohre 9 und die jeweilige zweite Strömungsmaschine 27 sind strömungstechnisch zwischen der jeweiligen ersten Gehäuseöffnung 25 und der zweiten Gehäuseöffnung 26 angeordnet.

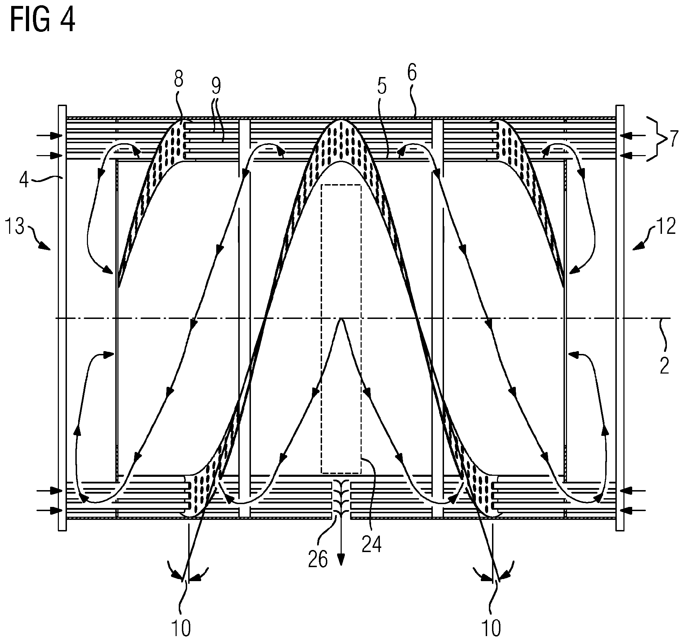

Figur 4 zeigt eine alternative Ansicht des zweiten Ausführungsbeispiels. Ähnlich wie in Figur 2 für das erste Ausführungsbeispiel sind in Figur 4 vor allem Details des Wärmetauschermantels 7 des zweiten Ausführungsbeispiels dargestellt. Der Wärmetauschermantel 7 weist im Wesentlichen axial verlaufende Rohre 9 auf, welche sich von der jeweiligen axialen Stirnseite 12 bzw. 13 in den Bereich der axialen Mitte erstrecken und in der zweiten Gehäuseöffnung 26 münden. Im Rahmen des Ausführungsbeispiels durchströmt das zweite Kühlmedium die Rohre 9 in axialer Richtung von der jeweiligen axialen Stirnseite 12 bzw. 13 zur axialen Mitte. Die Rohre 9 durchstoßen das im Wesentlichen schraubenbahnförmig um die Rotationsachse 2 verlaufende Leitelement 8. Im Rahmen des Ausführungsbeispiels weist das Leitelement 8 zwei Schraubenbahnen auf, welche bezüglich der axialen Mitte symmetrisch zueinander sind. Das erste Kühlmedium kann über den Durchgang 24 vom Inneren des ersten Gehäuseelementes 5 in den Wärmetauschermantel 7 eindringen und am Leitelement 8 entlang an den Rohren 9 vorbei schraubenbahnförmig von der axialen Mitte zur jeweiligen axialen Stirnseite 12 bzw. 13 strömen. Das Leitelement 8 weist dabei einen Steigungswinkel 10 bezüglich seiner jeweiligen Schraubenbahn auf, welcher vorzugsweise höchstens 60°, insbesondere 10° bis 30°, beträgt.

Prinzipiell können bei beiden erläuterten Ausführungsbeispielen auch Radial-Strömungsmaschinen anstelle von Axial-Strömungsmaschinen und umgekehrt verwendet werden, insbesondere unter Verwendung von geeignet ausgeformten Führungselementen zum effizienten Führen der jeweiligen Strömung. Denkbar ist auch, die Strömungsrichtung des ersten Kühlmediums und/oder des zweiten Kühlmediums umzukehren, wobei vorzugsweise Radial-Strömungsmaschinen anstelle von Axial-Strömungsmaschinen und umgekehrt verwendet werden.

## Patentansprüche

1. Elektrische Maschine umfassend
- einen hohlzylinderförmigen Stator (1),
- einen im Stator (1) um eine Rotationsachse (2) drehbar gelagerten Rotor (3),
- ein Gehäuse (4) aufweisend ein erstes, hohlzylinderförmiges Gehäuseelement (5), in welchem der Stator (1) und der Rotor (3) angeordnet sind, und ein zweites, hohlzylinderförmiges Gehäuseelement (6), in welchem das erste hohlzylinderförmige Gehäuseelement (5) angeordnet ist,
- einen Wärmetauschermantel (7), welcher zwischen dem ersten Gehäuseelement (5) und dem zweiten Gehäuseelement (6) angeordnet ist, wobei
der Wärmetauschermantel (7) zumindest ein im Wesentlichen schraubenbahnförmig um die Rotationsachse (2) verlaufendes Leitelement (8) sowie im Wesentlichen axial verlaufende, durch das jeweilige Leitelement (8) hindurchführende Rohre (9) aufweist,
wobei die elektrische Maschine zumindest abschnittsweise derart ausgestaltet ist, dass ein erstes Kühlmedium in einer ersten axialen Vorzugsrichtung durch das erste Gehäuseelement (5) führbar ist,
wobei der Wärmetauschermantel (7) zumindest abschnittsweise derart ausgestaltet ist, dass das erste Kühlmedium zwischen den Rohren (9) schraubenbahnförmig am jeweiligen Leitelement (8) entlang in einer zweiten, der ersten entgegengesetzten axialen Vorzugsrichtung führbar ist,
wobei der Wärmetauschermantel (7) zumindest abschnittsweise derart ausgestaltet ist, dass ein zweites Kühlmedium in axialer Richtung durch die Rohre (9) führbar ist.

2. Elektrische Maschine nach Anspruch 1,
wobei das jeweilige Leitelement (8) derart ausgestaltet ist, dass ein Steigungswinkel (10) der jeweiligen Schraubenbahn höchstens 60°, vorzugsweise 10° bis 30°, beträgt.

3. Elektrische Maschine nach einem der vorhergehenden Ansprüche,
wobei die elektrische Maschine derart ausgestaltet ist, dass das erste Kühlmedium fluiddicht vom zweiten Kühlmedium abgetrennt ist.

4. Elektrische Maschine nach einem der vorhergehenden Ansprüche,
wobei der Stator (1) ein Statoraktivteil (11) und an seiner jeweiligen axialen Stirnseite (12, 13) einen aus dem Statoraktivteil (11) herausragenden Wickelkopf (14) aufweist, wobei der Rotor (3) ein Rotoraktivteil (15) aufweist,
wobei der Rotor (3) zumindest an einer ersten axialen Stirnseite (12) zumindest eine Rotor-Öffnung (16) aufweist,
wobei der Rotor (3) und der Stator (1) an einer Mehrzahl von axialen Positionen nach radial außen offene Rotor-Kühlkanäle (17) bzw. Stator-Kühlkanäle (18) aufweisen,
wobei die Rotor-Kühlkanäle (17) mit der jeweiligen Rotor-Öffnung (16) verbunden sind,
wobei zwischen dem Stator (1) und dem ersten Gehäuseelement (5) zumindest eine Ausnehmung (19) angeordnet ist, durch welche das jeweils strömende erste Kühlmedium in axialer Richtung führbar ist.

5. Elektrische Maschine nach Anspruch 4,
wobei die elektrische Maschine zumindest an seiner ersten axialen Stirnseite (12) zumindest eine erste Leitvorrichtung (20) aufweist, mittels welcher jeweils das erste Kühlmedium vom Wärmetauschermantel (7) zur jeweiligen Rotor-Öffnung (16) und zum jeweiligen Wickelkopf (14) leitbar ist.

6. Elektrische Maschine nach Anspruch 4 oder 5,
wobei die elektrische Maschine eine erste Strömungsmaschine (21) zur Umwälzung des ersten Kühlmediums aufweist,
wobei die elektrische Maschine zumindest an einer zweiten axialen Stirnseite (13) zumindest eine zweite Leitvorrichtung (22) aufweist,
wobei mittels der jeweiligen zweiten Leitvorrichtung (22) das erste Kühlmedium vom jeweiligen Wickelkopf (14) zur ersten Strömungsmaschine (21) und von der ersten Strömungsmaschine (21) zum Wärmetauschermantel (7) leitbar ist.

7. Elektrische Maschine nach Anspruch 4 oder 5,
wobei die elektrische Maschine zwei erste Strömungsmaschinen (21) zur Umwälzung des ersten Kühlmediums aufweist,
wobei die elektrische Maschine an seinen beiden axialen Stirnseiten (12, 13) jeweils eine dritte Leitvorrichtung (23) aufweist,
wobei mittels der jeweiligen dritten Leitvorrichtung (23) das erste Kühlmedium vom Wärmetauschermantel (7) zur jeweiligen ersten Strömungsmaschine (21) und von der jeweiligen ersten Strömungsmaschine (21) zur jeweiligen Rotor-Öffnung (16) und zum jeweiligen Wickelkopf (14) leitbar ist.

8. Elektrische Maschine nach Anspruch 4, 5 oder 7,
wobei das erste Gehäuseelement (5) im Bereich seiner axialen Mitte zumindest einen Durchgang (24) aufweist, durch welchen das erste Kühlmedium jeweils von innerhalb des ersten Gehäuseelementes (5) in den Wärmetauschermantel (7) führbar ist.

9. Elektrische Maschine nach einem der vorhergehenden Ansprüche,
wobei das Gehäuse (4) zumindest eine erste Gehäuseöffnung (25) und zumindest eine zweite Gehäuseöffnung (26) zum Ein- und Auslassen des zweiten Kühlmediums aufweist,
wobei die elektrische Maschine eine zweite Strömungsmaschine (27) zur Umwälzung des zweiten Kühlmediums aufweist,
wobei die zweite Strömungsmaschine (27) und die Rohre (9) des Wärmetauschermantels (7) strömungstechnisch zwischen der jeweiligen ersten Gehäuseöffnung (25) und der jeweiligen zweiten Gehäuseöffnung (26) angeordnet sind.

10. Elektrische Maschine nach Anspruch 9,
wobei die zumindest eine erste Gehäuseöffnung (25) im Bereich einer ersten axialen Stirnseite (12) und die zumindest eine zweite Gehäuseöffnung (26) im Bereich einer zweiten axialen Stirnseite (13) angeordnet sind.

11. Elektrische Maschine nach Anspruch 9,
wobei jeweils eine erste Gehäuseöffnung (25) im Bereich der jeweiligen axialen Stirnseite (12, 13) und die zumindest eine zweite Gehäuseöffnung (26) im Bereich der axialen Mitte angeordnet sind.

12. Elektrische Maschine nach einem der vorhergehenden Ansprüche,
wobei die elektrische Maschine mit einer elektrischen Leistung von zumindest 1 MW, insbesondere mehr als 3 MW, betreibbar ist,
wobei die elektrische Maschine eine Achshöhe von zumindest 500 mm, insbesondere mehr als 630 mm, aufweist, und/oder wobei die elektrische Maschine als Generator, insbesondere Windkraftgenerator, oder als Antriebsmotor für einen Pumpenantrieb, einen Kompressorantrieb oder einen Stahlwerksantrieb ausgestaltet ist.

## Claims

1. Electric machine comprising
- a hollow cylinder-shaped stator (1),
- a rotor (3) rotatably mounted about a rotational axis (2) in the stator (1),
- a housing (4), having a first hollow cylinder-shaped housing element (5), in which the stator (1) and the rotor (3) are arranged, and a second hollow cylinder-shaped housing element (6), in which the first hollow cylinder-shaped housing element (5) is arranged,
- a heat exchanger cover (7), which is arranged between the first housing element (5) and the second housing element (6),
wherein
the heat exchanger cover (7) has at least one guide element (8) which runs essentially helically about the rotational axis (2) in addition to pipes (9) which run essentially axially and pass through the respective guide element (8),
wherein the electric machine is designed, at least in sections, such that a first cooling medium can be guided through the first housing element (5) in a first axial preferred direction,
wherein the heat exchanger cover (7) is designed, at least in sections, such that the first cooling medium can be guided between the pipes (9) in a helical manner along the respective guide element (8) in a second axial preferred direction which runs counter to the first direction,
wherein the heat exchanger cover (7) is designed, at least in sections, such that a second cooling medium can be guided through the pipes (9) in an axial direction.

2. Electric machine according to claim 1,
wherein the respective guide element (8) is designed such that a pitch angle (10) of the respective helical path amounts at most to 60°, preferably 10° to 30°.

3. Electric machine according to one of the preceding claims,
wherein the electric machine is designed such that the first cooling medium is separated from the second cooling medium in a fluid-tight manner.

4. Electric machine according to one of the preceding claims,
wherein the stator (1) has a stator active part (11) and a winding head (14) projecting from the stator active part (11) at its respective axial front end (12, 13),
wherein the rotor (3) has a rotor active part (15),
wherein the rotor (3) has at least one rotor opening (16) at least at a first axial front end (12),
wherein the rotor (3) and the stator (1) have rotor cooling ducts (17) or stator cooling ducts (18) which open radially outwards at a plurality of axial positions,
wherein the rotor cooling ducts (17) are connected to the respective rotor opening (16),
wherein at least one recess (19) is arranged between the stator (1) and the first housing element (5), through which recess the respectively flowing first cooling medium can be guided in the axial direction.

5. Electric machine according to claim 4,
wherein the electric machine has at least one first guide apparatus (20) at least at its first axial front end (12), by means of which the first cooling medium can be routed from the heat exchanger cover (7) to the respective rotor opening (16) and to the respective winding head (14) in each case.

6. Electric machine according to claim 4 or 5,
wherein the electric machine has a first turbo-machine (21) for recirculating the first cooling medium,
wherein the electric machine has at least one second guide apparatus (22) at least at a second axial front end (13),
wherein by means of the respective second guide apparatus (22), the first cooling medium can be routed from the respective winding head (14) to the first turbo-machine (21) and from the first turbo-machine (21) to the heat exchanger cover (7).

7. Electric machine according to claim 4 or 5,
wherein the electric machine has two first turbo-machines (21) for recirculating the first cooling medium,
wherein the electric machine has a third guide apparatus (23) at its two axial front ends (12, 13) in each case,
wherein using the respective third guide apparatus (23) the first cooling medium can be routed from the heat exchanger cover (7) to the respective first turbo-machine (21) and from the respective first turbo-machine (21) to the respective rotor opening (16) and to the respective winding head (14).

8. Electric machine according to claim 4, 5 or 7,
wherein the first housing element (5) has at least one passage (24) in the region of its axial centre, through which the first cooling medium can be guided in each case from within the first housing element (5) into the heat exchanger cover (7) .

9. Electric machine according to one of the preceding claims,
wherein the housing (4) has at least one first housing opening (25) and at least one second housing opening (26) for the inflow and outflow of the second cooling medium,
wherein the electric machine has a second turbo-machine (27) for recirculating the second cooling medium,
wherein the second turbo-machine (27) and the pipes (9) of the heat exchanger cover (7) are arranged, in terms of flow, between the respective first housing opening (25) and the respective second housing opening (26).

10. Electric machine according to claim 9,
wherein the at least one first housing opening (25) is arranged in the region of a first axial front end (12) and the at least one second housing opening (26) is arranged in the region of a second axial front end (13).

11. Electric machine according to claim 9,
wherein in each case a first housing opening (25) is arranged in the region of the respective axial front end (12, 13) and the at least one second housing opening (26) is arranged in the region of the axial centre.

12. Electric machine according to one of the preceding claims,
wherein the electric machine can be operated with an electrical power of at least 1 MW, in particular more than 3 MW,
wherein the electric machine has an axial height of at least 500 mm, in particular more than 630 mm, and/or wherein the electric machine is designed as a generator, in particular a wind power generator, or as a drive motor for a pump drive, a compressor drive or a steelwork drive.

## Revendications

1. Machine électrique comprenant
- un stator (1) en forme de cylindre creux,
- un rotor (3) monté tournant autour d'un axe (2) de rotation dans le stator (1),
- une carcasse (4) ayant un premier élément (5) de carcasse en forme de cylindre creux, dans lequel sont montés le stator (1) et le rotor (3) et un deuxième élément (6) de carcasse en forme de cylindre creux, dans lequel est monté le premier élément (5) de carcasse en forme de cylindre creux,
- une chemise (7) formant échangeur de chaleur, qui est disposée entre le premier élément (5) de carcasse et le deuxième élément (6) de carcasse,
dans laquelle la chemise (7) formant échangeur de chaleur a au moins un élément (8) de conduite s'étendant sensiblement hélicoïdalement autour de l'axe (2) de rotation ainsi qu'un tube (9) s'étendant sensiblement axialement et passant dans l'élément (8) de conduite,
dans laquelle la machine électrique est conformée au moins par segment, de manière à ce qu'un premier fluide de refroidissement puisse passer dans le premier élément (5) de carcasse, dans un premier sens axial préféré,
dans laquelle la chemise (7) formant échangeur de chaleur est conformée, au moins par segment, de manière à ce que le premier fluide de refroidissement puisse passer entre le tube (9) hélicoïdalement sur l'élément (8) de conduite, dans un deuxième sens axial préféré opposé,
dans laquelle la chemise (7) formant échangeur de chaleur est conformée au moins par segment, de manière à ce qu'un deuxième fluide de refroidissement puisse passer dans le tube (9) dans la direction axiale.

2. Machine électrique suivant la revendication 1,
dans laquelle l'élément (8) de conduite est conformé de manière à ce qu'un angle (10) de pas de l'hélicoïde soit au plus de 60°, en allant de préférence de 10° à 30°.

3. Machine électrique suivant l'une des revendications précédentes,
dans laquelle la machine électrique est conformée de manière à ce que le premier fluide de refroidissement soit séparé d'une manière étanche au fluide du deuxième fluide de refroidissement.

4. Machine électrique suivant l'une des revendications précédentes,
dans laquelle le stator (1) a une partie (11) active de stator et, sur ses côtés (12, 13) frontaux axiaux, une tête (14) de bobine sortant de la partie (11) active de stator, dans laquelle le rotor (3) a une partie (15) active de rotor,
dans laquelle le rotor (3) a au moins une ouverture (16) de rotor sur un premier côté (12) frontal axial,
dans laquelle le rotor (3) et le stator (1) ont, en une pluralité de positions axiales, des canaux (7) de refroidissement du rotor ou des canaux (18) de refroidissement du stator ouverts vers l'extérieur radialement,
dans laquelle les canaux (17) de refroidissement du rotor communiquent avec l'ouverture (16) du rotor,
dans laquelle il est prévu, entre le stator (1) et le premier élément (5) de carcasse, au moins un évidement (19), par lequel le premier fluide de refroidissement en écoulement peut passer dans une direction axiale.

5. Machine électrique suivant la revendication 4,
dans laquelle la machine électrique a au moins, sur son premier côté (12) frontal axial, au moins un premier dispositif (20) de conduite au moyen duquel le premier fluide de refroidissement peut être conduit de la chemise (7) formant échangeur de chaleur à l'ouverture (16) de rotor et à la tête (14) de bobine.

6. Machine électrique suivant la revendication 4 ou 5,
dans laquelle la machine électrique a une première turbomachine (21) pour faire circuler le premier fluide de refroidissement,
dans laquelle la machine électrique a au moins un deuxième dispositif (22) de conduite sur un deuxième côté (13) frontal axial,
dans laquelle, au moyen du deuxième dispositif (22) de conduite, le premier fluide de refroidissement peut être conduit de la tête (14) de bobine à la première turbomachine (21 et de la première turbomachine (21) à la chemise (7) formant échangeur de chaleur.

7. Machine électrique suivant la revendication 4 ou 5,
dans laquelle la machine électrique a deux premières turbomachines (21) de mise en circulation du premier fluide de refroidissement,
dans laquelle la machine électrique a respectivement un troisième dispositif (23) de conduite sur ses deux côtés (12, 13) frontaux axiaux,
dans laquelle, au moyen du troisième dispositif (23) de conduite, le premier fluide de refroidissement peut être conduit de la chemise (7) formant échangeur de chaleur à la première turbomachine (21) et de la première turbomachine (21) à l'ouverture (16) de rotor et à la tête (14) de bobine.

8. Machine électrique suivant la revendication 4, 5 ou 7,
dans laquelle le premier élément (5) de carcasse a, dans la région de son milieu axial, au moins un passage (24) par lequel le premier fluide de refroidissement peut aller de l'intérieur du premier élément (5) de carcasse à la chemise (7) formant échangeur de chaleur.

9. Machine électrique suivant l'une des revendications précédentes,
dans laquelle la carcasse (4) a au moins une première ouverture (25) de carcasse et au moins une deuxième ouverture (26) de carcasse pour faire entrer et sortir le deuxième fluide de refroidissement,
dans laquelle la machine électrique a une deuxième turbomachine (27) pour faire circuler le deuxième fluide de refroidissement,
dans laquelle la deuxième turbomachine (27) et le tube (9) de la chemise (7) formant échangeur de chaleur sont montés en technique d'écoulement entre la première ouverture (25) de la carcasse et la deuxième ouverture (26) de la carcasse.

10. Machine électrique suivant la revendication 9,
dans laquelle la au moins une première ouverture (25) de la carcasse est disposée dans la région d'un premier côté (12) frontal axial et la au moins une deuxième ouverture (26) de la carcasse, dans la région d'un deuxième côté (13) frontal axial.

11. Machine électrique suivant la revendication 9,
dans laquelle une première ouverture (25) de la carcasse est disposée dans la région des côtés (12, 13) frontaux axiaux et la au moins une deuxième ouverture (26) de la carcasse, dans la région du milieu axial.

12. Machine électrique suivant l'une des revendications précédentes,
dans laquelle la machine électrique peut fonctionner à une puissance électrique d'au moins 1 MW, notamment de plus de 3 MW,
dans laquelle la machine électrique a une hauteur d'axe d'au moins 500 mm, notamment de plus de 660 mm, et/ou dans laquelle la machine électrique est conformée en génératrice, notamment en génératrice d'éolienne ou en moteur d'entraînement pour un entraîne de pompe, un entraînement de compresseur ou un entraînement d'aciérie.
